(19) Europäisches Patentamt / European Patent Office / Office européen des brevets

(11) **EP 3 124 526 A1**

(12) **EUROPEAN PATENT APPLICATION**
published in accordance with Art. 153(4) EPC

(43) Date of publication:
**01.02.2017 Bulletin 2017/05**

(21) Application number: **15769115.5**

(22) Date of filing: **10.03.2015**

(51) Int Cl.:
*C08J 9/00* $^{(2006.01)}$   *B01D 71/26* $^{(2006.01)}$
*B29C 47/34* $^{(2006.01)}$   *B29C 47/88* $^{(2006.01)}$
*C08J 9/26* $^{(2006.01)}$

(86) International application number:
**PCT/JP2015/057058**

(87) International publication number:
**WO 2015/146580 (01.10.2015 Gazette 2015/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.03.2014 JP 2014059504**

(71) Applicant: **Toray Battery Separator Film Co., Ltd. Tochigi 329-2763 (JP)**

(72) Inventors:
• **ICHINOMIYA, Takashi**
  **Tochigi 329-2763 (JP)**
• **SUGATA, Masami**
  **Tochigi 329-2763 (JP)**

(74) Representative: **Global IP Europe Patentanwaltskanzlei Pfarrstraße 14 80538 München (DE)**

(54) **METHOD FOR MANUFACTURING MICROPOROUS PLASTIC FILM**

(57)    The present invention provides a production method of a microporous plastic film that achieves various characteristics such as strength while having an excellent appearance grade by using a wet stretching method.

The production method of a microporous plastic film according to the present invention comprises: kneading a diluent and a polymer with an extruder; discharging the polymer kneaded with the diluent into a sheet from a mouthpiece; and stretching the sheet discharged from the mouthpiece in a conveying direction of the sheet with a plurality of rollers; the diluent being applied to at least one of the plurality of rollers and/or the sheet in the step of stretching the sheet in the conveying direction of the sheet.

FIG. 1

EP 3 124 526 A1

**Description**

**Technical Field**

The present invention relates to a production method of a microporous plastic film.

**Background Art**

Microporous plastic films are widely used as separation membranes for substance separation, selective permeation, or the like, and as separator materials for electrochemical elements such as alkali or lithium rechargeable batteries, fuel cells, and capacitors. In particular, microporous plastic films are suitably used as separators for lithium ion batteries.

An example of a conventional production method of a microporous film comprising a plastic such as a polyolefin, in particular, as a raw material is a wet method such as that disclosed in Patent Document 1 or Patent Document 2. In a wet method, a film having micropores is obtained by adding a diluent such as liquid paraffin to a polymer, kneading and dispersing the mixture, discharging the mixture from a mouthpiece onto a cooling drum, cooling and hardening the mixture to form a gel sheet, stretching the sheet in a uniaxial direction or biaxial directions using a roller method or a tenter method for the purpose of enhancing strength or the like, and then extracting the diluent.

In particular, in the case of a roller method of stretching the sheet in the advancing direction using a plurality of rollers, the diluent is bled out from the gel sheet surface by heat or pressure due to tension, and the sheet is conveyed or stretched while the diluent is interposed at the boundary between the film and the roller surface. In order to stretch the gel sheet, the sheet is sufficiently cooled to the crystallization completion temperature of the polymer or lower and is then stretched while heating to a temperature not exceeding the melting point (for example, to at least the crystalline dispersion temperature, as described in Patent Document 2).

**Citation List**

**Patent Literature**

Patent Document 1: Japanese Unexamined Patent Application Publication (Translation of PCT Application) No. 2012-500130A
Patent Document 2: Japanese Patent No. 5021461 B

Summary of Invention

Technical Problem

However, a roller method has the following problems. Slight amounts of contaminants such as low-molecular weight components inherent to the film or dust in the air adhere to the surface of the roller used for stretching, but the diluent that has been bled out is progressively contaminated by the contaminants as the diluent remains behind on or adheres to the roller surface during the process, and the diluent once again adhere to the sheet that is conveyed, which diminishes the appearance grade. In addition, even if the diluent is not contaminated, if the sheet is charged by contact with the roller or the like, a larger amount of the diluent adheres to the charged part, which results in a gradation in the re-adhering of the diluent. When this passes through a high-temperature part for stretching, a difference arises in the wet state, which causes a gradation in the color of the film after stretching/washing and leads to a marked degradation in appearance grade.

**Solution to Problem**

The production method of a microporous plastic film according to the present invention which solves the problems described above is as follows. A production method of a microporous plastic film, the method comprising:

kneading a diluent and a polymer with an extruder;
discharging the polymer kneaded with the diluent into a sheet from a mouthpiece; and
stretching the sheet discharged from the mouthpiece in a conveying direction of the sheet with a plurality of rollers;
an amount of the diluent on the sheet conveyed to a stretching part being not less than $4 \times 10^{-3}$ L/m$^2$ and not greater

than 40 x 10$^{-3}$ L/m$^2$ in the step of stretching the sheet in the conveying direction of the sheet.

Advantageous Effects of Invention

With the present invention, it is possible to obtain a microporous plastic film that achieves various characteristics such as strength while having an excellent appearance grade by using a wet stretching method.

**Brief Description of Drawings**

FIG. 1 is a schematic side view of an embodiment of the present invention.
FIG. 2 is an enlarged schematic perspective view of an embodiment of a diluent application unit of the present invention.

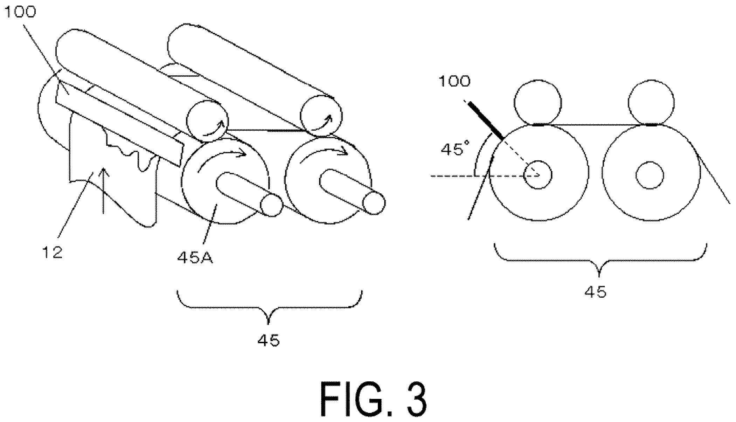

FIG. 3 is an enlarged schematic perspective view of an embodiment of a unit for measuring the diluent on a sheet in the present invention.

**Description of Embodiments**

Preferred embodiments of the microporous plastic film of the present invention will be described in detail hereinafter with reference to the drawings.

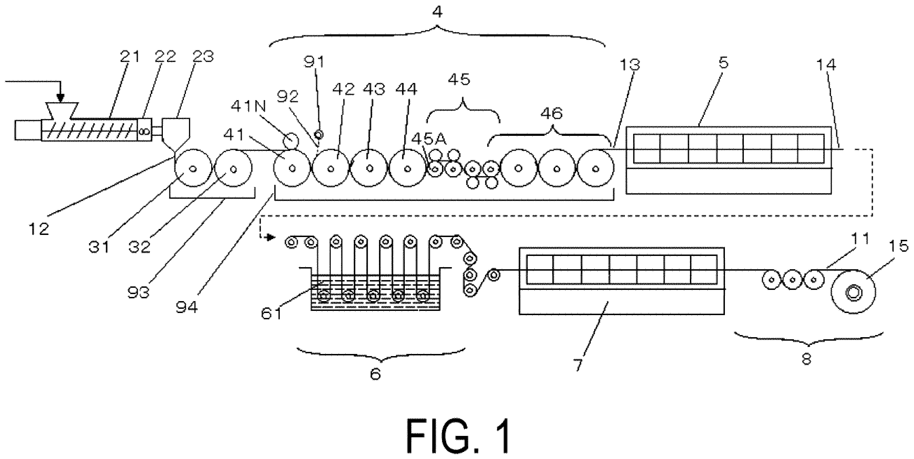

FIG. 1 is a schematic side view of the production process of the microporous plastic film of an embodiment of the present invention.
As a preferable example of a production method of a microporous plastic film 11, a polyolefin solution is prepared by mixing a polyolefin resin with a diluent and heating and melting the mixture. The diluent determines the structure for forming the micropores of the microporous plastic film and also contributes to the improvement in the stretchability (indicating a decrease in unevenness in the stretching ratio for expressing strength, for example) when stretching the film.
The diluent is not particularly limited as long as the diluent is a substance that can be mixed with or dissolved in a polyolefin resin. The composition may be mixed with the polyolefin in the melt-kneaded state, but a solid solvent may also be mixed into the diluent at room temperature. Examples of such a solid diluent include stearyl alcohol, ceryl alcohol, and paraffin wax. In order to prevent unevenness or the like in stretching, and out of consideration that the substance may be applied at a later time, the diluent is preferably a liquid at room temperature. Examples of liquid diluents include aliphatic, cycloaliphatic, or aromatic hydrocarbons such as nonane, decane, decalin, paraxylene, undecane, dodecane, and liquid paraffin, mineral oil distillates having boiling points corresponding to those of the aforementioned hydrocarbons, and phthalic acid esters which are liquids at room temperature such as dibutylphthlate and dioctylphthalate. In order to obtain a gel sheet having a stable liquid diluent content, it is preferable to use a non-volatile liquid diluent such as liquid paraffin. The viscosity of the liquid diluent is preferably from 20 to 200 cSt at 40°C, for example.
From the perspective of enhancing the formability of the extrudate, the compounding ratio of the polyolefin resin and the diluent is preferably such that the polyolefin resin constitutes from 10 to 50 mass% on the basis of a total of 100 mass% of the polyolefin resin and the diluent. The uniform melt-kneading process for the polyolefin solution is not particularly limited, but a calender, various mixers, an extruder 21 having a screw, as illustrated in FIG. 1, or the like may be used.
The preferable range of the temperature of the polyolefin solution in the extruder varies depending on the resin. For example, the temperature is from 140 to 250°C for a polyethylene composition and is from 190 to 270°C when the composition contains polypropylene. The temperature is determined indirectly by installing a thermometer inside the extruder or in the cylinder part, and the heater temperature or revolution speed and the discharge rate of the cylinder part are adjusted appropriately so that the target temperature is reached.
The polyolefin solution that is melt-kneaded with the extruder 21 is discharged into a sheet from the slit part of a mouthpiece 23 while weighing the solution as necessary with a gear pump 22. The discharged sheet 12 is brought into contact with a cooling drum 31 and hardened. At this time, the polyolefin portion of the sheet 12 forms a crystal structure, and this structure serves as a pillar for supporting the pores of a microporous plastic film 11 formed later. The sheet 12 encapsulates the diluent kneaded inside the extruder 21 so as to form a gel. Part of the diluent is bled out from the sheet surface as a result of the cooling of the gel sheet 12 so as to be conveyed over the cooling drum 31 in a state in which the surface is wet due to the diluent.
The temperature of the cooling drum 31 is preferably from 15 to 40°C in order to have an effect on the crystal structure of the sheet 12. This is because the final cooling temperature of the sheet 12 is preferably set to the crystallization completion temperature or lower, and molecular orientation progresses easily at the time of subsequent stretching due to a fine higher order structure. The cooling time may also be compensated for by increasing the diameter of the drum 31 or adding a drum 32 or a plurality of drums as necessary. At this time, it is preferable to determine the conveying speed, the drum temperature, the drum size, and the number of drums while also taking into consideration the cooling rate in order to make the crystal structure inside the sheet 12 fine and uniform. In addition, even if the target sheet temperature is 30°C, for example, the heat transfer time is insufficient when the rate is high, so the temperature of the drum 31 may be set to a low temperature such as 20°C. However, if the temperature is lower than 25°C, condensation tends to occur, so it is preferable to implement air conditioning so as to lower the humidity. The shape of the cooling drum 21 may be a roller shape or a belt shape. In addition, the material of the surface is preferably a material having excellent shape stability and good machining accuracy so that the roller speed is constant. For example, metals, ceramics, fiber composite materials, or the like may be considered, but metals are particularly preferable due to their excellent thermal conduction to the film. Non-adhesive coating or rubber covering may also be performed to a degree that does not inhibit thermal conduction. Since the sheet and the roller surface are in a wet state after the diluent is bled out, metals or metal plating which do not swell due to this state and have excellent scratch resistance or thermal conduction are preferable.

The roughness of the roller surface is preferably from approximately 0.2 40 $\mu$m in terms of the maximum height. When a mirror surface is preferable, the roughness is from approximately 0.2 to 0.8 $\mu$m, and when a sufficiently rough surface is preferable, the roughness is from 20 to 40 $\mu$m. Since the top of the roller is in a wet state due to the diluent, the coefficient of friction is low due to lubrication in the case of a mirror surface. A rough surface has an effect of reducing or preventing lubrication by discharging the diluent from concavities and convexities, which increases the coefficient of friction. Forming a mirror surface is basically preferable in that doing so enhances the maintainability when cleaning or the like or the speed control precision. Since it is necessary to balance the tension generated by stretching from the cooling drum 31 up to the stretching step 4 in the longitudinal direction and the thermal expansion or the like of the sheet 12 generated due to an increase in temperature at the time of longitudinal stretching, a mirror surface and a rough surface may be combined as necessary to prevent the sheet 12 from bending or to prevent slack from forming. The friction force reduced by the mirror surface is also preferably enhanced by pressing a nip roller between the rollers as necessary.

The internal roller structure is preferably formed so that a flow path is provided to allow a cooling medium to circulate into the roller in order to control the temperature of the surface and so that a conventionally used heat pump or various cooling devices are built into the structure. In addition, the roller is driven to rotate at a set speed by a rotary driving unit such as a motor, and a shifting mechanism may be provided as necessary between each of the rollers so that a draw tension or relaxed state is applied as necessary. The speed of each unit may also be controlled by a motor having high speed control precision in each roller.

Furthermore, the wet sheet 12 may be pressed against the drum 21 as necessary using adhesion means such as a nip roller, a jet nozzle, a suction chamber, or static electricity application so that the cooling efficiency does not drop due to lubrication or so that the sheet 12 does not bend. These adhesion means are preferable in that, in addition to an improvement in traveling characteristics, the cooling efficiency of the sheet 12 increases, and it becomes easy to set the cooling rate or the final cooling temperature.

The thickness of the sheet 12 is preferably adjusted by adjusting the speed of the cooling drum with respect to the flow rate from the slit part of the mouthpiece corresponding to the discharge rate.

Next, after the gel sheet 12 is stretched in the conveying direction of the sheet by a plurality of groups of rollers, both ends of the sheet 13 are continuously gripped with clips or the like as necessary so as to stretch the sheet in the width direction of the sheet (direction orthogonal to the conveying direction) while heating and keeping the sheet warm in an oven 5. Accordingly, such stretching is performed consecutively by positioning a longitudinal stretching machine for stretching the gel sheet in the longitudinal direction and a transverse stretching machine for stretching the gel sheet in the transverse direction adjacent to one another in the production direction of the microporous membrane (direction facing the winding side of the microporous membrane from the extruder side) and then using the longitudinal stretching machine and the transverse stretching machine. The term "continuous" is an antonym of "batch-type". Specifically, this means that processes from the supply of the raw materials to the winding of the microporous membrane are performed in a stationary state. Stretching in this way makes it possible to achieve properties such as strength or permeability of the microporous film as well as high productivity.

In this case, in the sheet conveying direction stretching step (called "longitudinal stretching" hereafter), the stretching mechanism comprises a roller having a surface made of a metal or the like and having temperature control mechanism such as a conventional heater on the inside, as in the case of the cooling drum described above, and the driving thereof is also the same as that of the cooling drum described above. In addition, an idler roller which is not driven (not illustrated in FIG. 1) may also be provided as necessary in order to establish degrees of freedom of the roller path. However, in this case, the coefficient of friction between the wet film and the roller is low, so it is preferable for the idler roller to be a bearing or to have a small inertial loss so that a small rotational force is sufficient, and it may also be preferable not to provide an idler roller as necessary. In the stretching step, it is preferable to provide a nip roller 41 N in order to avoid situations in which the effects of tension fluctuation due to bending extend to the casting step and in order to prevent an increase in sheet temperature prior to stretching from becoming non-uniform due to the non-uniform incorporation of air. A plurality of nip rollers may also be provided in each roller group as necessary.

That is, when the tension of the sheet fluctuates due to the bending of the sheet in the longitudinal stretching step, the transmission of this tension fluctuation to the casting step makes the gel sheet 12 susceptible to damage, and an extremely large amount of labor becomes necessary for subsequent recovery. In addition, when the sheet is conveyed at a speed exceeding 4 m/min, for example, there is a risk that air may be incorporated between the roller and the sheet, and the temperature of the sheet becomes non-uniform in this case. Therefore, it is preferable to suppress such bending of the sheet or air entrapment by providing a nip roller 41 N. The stretching ratio varies depending on the thickness of the gel sheet, but the sheet is preferably stretched by 5 to 12 times in the sheet conveying direction. When stretching in the width direction of the sheet is performed together with stretching in the sheet conveying direction as necessary in order to ensure enhanced strength or enhanced productivity, the area magnification is preferably not less than 25 times, more preferably not less than 30 times, and most preferably not less than 42 times.

The stretching temperature is preferably not higher than the melting point of the polyolefin resin and is more preferably in a range of the crystalline dispersion temperature Tcd of the polyolefin resin to the melting point of the polyolefin resin. For example, in the case of a polyethylene resin, the temperature is from 80 to 130°C and is more preferably from 100 to 125°C. After stretching, cooling is performed to or below these temperatures. In the stretching, the diluent may bleed out from the surface of the sheet. When the diluent bleeds out in this way, the amount of diluent from the sheet surface is greater when the stretching temperature is higher. When the amount of the diluent is large, the friction relative to the roller becomes low, which makes it difficult to grip the sheet with the roller and tends to cause bending at the time of stretching. On the other hand, when the stretching temperature is high, the sheet is sufficiently softened, so the tension required for stretching becomes low. The lower the stretching tension, the lower the sheet gripping force required to prevent slipping at the time of stretching, which facilitates stretching and inhibits bending. That is, in order to reduce stretching tension, the stretching temperature is preferably higher, but in order to reduce the amount of the diluent, it is preferable to lower the stretching temperature. When the amount of the diluent present on the sheet surface at the time of stretching is too large, bending tends to occur at the time of stretching even if the tension required for stretching is too high, so it is preferable to appropriately adjust the amount of the diluent on the sheet surface in accordance with the state of the sheet or the required physical properties in order to ensure stable stretching.

The stretching described above can create cleavages in the higher order structure formed in the gel sheet, refine crystalline phase, and form a multiplicity of fibrils. The fibrils form a mesh structure with three-dimensional irregular linkages. The stretching improves the mechanical strength and expands the fine pores, which is suitable for a battery separator, for example.

A microporous plastic film 11 can be obtained by washing/removing the diluent of a uniaxially stretched sheet 13 or a biaxially stretched sheet 14 obtained in this way with a conventionally used technique such as the method described in WO/2008/016174, for example, and then drying the sheet. To obtain the microporous plastic film 11, the film may be re-heated and re-stretched in a dry stretching step 7 after the washing step 6. The re-stretching step 7 may involve roller-type or tenter-type stretching, and heat treatment may be performed in this step so as to adjust the physical properties or to remove residual strain. Furthermore, the surface of the microporous plastic film 11 may also be subjected to surface treatment such as corona discharge or functional coating with heat-resistant particles or the like in accordance with the application.

In FIG. 1, the encapsulated diluent bleeds out from the gel sheet 12 as a result of being cooled by the cooling drums 31 and 32. The diluent is also bled out by the pressure due to the conveying tension at this time. In particular, when the cooling temperature of the cooling drums is low, the crystal structure of the surface becomes fine, so the bleed out amount tends to increase. For the same reason, after the sheet is discharged from the mouthpiece 23, the surfaces of the gel sheet 12 and the stretched films 13 and 14 are in a wet state due to the diluent until the removal/washing of the diluent in the washing step 6. In particular, the gel sheet 12 is heated to the stretching temperature described above by the preheating roller groups 41 to 44, for example, in the longitudinal stretching step 4, but the bleeding out of the diluent is accelerated by the increase in temperature, and a particularly large amount of the diluent bleeds out from the cooling drum 31 to the upstream of the longitudinal stretching step 4 (for example, heating rollers 41 and 42 or the like). In FIG. 1, the diluent that is bled out drops onto the roller surface, so pans 93 and 94 may also be installed in order to collect and dispose of or reuse the diluent.

In FIG. 1, stretching is performed at the magnification described above by establishing a large speed difference in the stretching roller group 45 in the longitudinal stretching step 4, for example. Micro pores develop as a result of the formation of fibrils inside the gel sheet 12 due to stretching, so the diluent that is bled out is once again partially incorporated into the sheet due to the capillary phenomenon. A large amount of the diluent may also bleed out due to cooling and re-heating after the sheet is discharged from the mouthpiece 23 described above, and the remaining amount of the diluent following the stretching roller part 45 is very small. In addition, when preliminary stretching is performed between the heating roller groups 41 to 44 in order to enhance the traveling characteristics, for example, the remaining amount of the diluent is reduced in the second half of the heating roller groups. The bleeding amount and the remaining amount of the diluent vary depending on the composition of the polyolefin resin, the mixing ratio with the diluent, the cooling conditions of the cooling drums 31 and 32, and the heating conditions of the longitudinal stretching part 4. The sheet may be in a relatively wet state up to the stretching part 45, or the sheet may be carried to the stretching part 45 in a roughly dry state.

As described above, diluent is bled out and drops onto the lower parts of the rollers in the vicinity of the cooling drums 31 and 32 and in the vicinity of the heating parts 41 to 44 of the longitudinal stretching step 4. There may also be a certain amount of diluent that continues to accumulate for a certain amount of time in association with the rotating rollers. The present inventors discovered that when the amount of the diluent that is bled out is large, the diluent accumulates or adheres to the rollers in the longitudinal stretching step 4, and the diluent re-adheres to the sheet, which makes it possible to prevent a reduction in the appearance grade. The present invention is also effective in cases in which the sheet is charged due to contact with rollers or the like. That is, when a large amount of the diluent adheres to the charged part, a gradation in the diluent is formed on the sheet surface, and a difference arises in the wet states as the sheet passes through the stretching high-temperature part thereafter, which results in color unevenness (reduction in appearance grade). However, in the present invention, by maintaining a certain amount of the diluent at the stretching part inlet in the longitudinal stretching step, the generation of a gradation can be avoided, and a reduction in appearance grade can be prevented or lightened.

That is, in the present invention, it is critical for a certain amount of the diluent to be present on the sheet at the stretching part inlet of the longitudinal stretching step. This will be described with reference to FIG. 1. At the front portion of the nip roller of the first stretching roller 45 of the longitudinal stretched step 4, it is critical for the sheet to be in a sufficiently wet state. The amount of the diluent on the sheet is preferably not less than $4 \times 10^{-3}$ L/m$^2$ and not greater than $40 \times 10^{-3}$ L/m$^2$. If the amount of the diluent is less than $4 \times 10^{-3}$ L/m$^2$, the sheet is in a dry state in the stretching step, which leads to more decreases in appearance grade as described above. On the other hand, if the amount of the diluent is greater than $40 \times 10^{-3}$ L/m$^2$, the amount of lubrication of the diluent between the sheet 12 and the roller surface of the stretching part 4 becomes large, which may cause the sheet to bend easily.

Here, preliminary stretching by the heating parts illustrated by 41 to 44 is performed for the purpose of relieving any slack caused by the thermal expansion of the sheet or providing a minute scaling factor for absorbing slack or deformation during conveying due to the weight of the sheet itself, and therefore the preliminary stretching differs from the deformation in the stretching roller 45. Specifically, preliminary stretching in the heating parts refers to stretching in which the peripheral speed difference between the first heating roller 41 and the last heating roller 44 is less than 3%. A stretching roller is a roller that imparts the sheet with permanent deformation. This refers to a roller that yields a peripheral speed difference of not less than 3% with respect to an upstream roller, and a group of rollers that provides a peripheral speed difference of not less than 3% is collectively called a stretching part.

The method of setting the amount of the diluent on the sheet to within the correct range may use any means since the amount of the diluent that is bled out varies depending on the composition of the sheet 12, the temperature conditions, or the like, but an example is the following method.

When the amount of the diluent that is bled out is too large due to the composition of the sheet 12 or the temperature conditions, a diluent scraping unit (scraping member) comprising a scraper or the like may be provided in the vicinity of the cooling drums 31 and 32 or between the heating parts 41 to 44 of the longitudinal stretching step 4 so as to set the amount of diluent to within the preferred range by reducing the amount of the bled out diluent that adheres to the surface of the sheet 12.

When the amount of the diluent that is bled out from the sheet 12 is small, the amount of the diluent can be compensated for by applying a diluent 92 to at least one roller, the film (on the sheet 12), or both the roller and the film using a coating unit 91 in part of the longitudinal stretching step 4. In particular, as described above, when the nip roller 41 N is used in the longitudinal stretching step in order to prevent bending or the incorporation of air, the sheet is pressed between the nip roller 41 N and the rollers (the diluent present on the sheet surface is scraped from the sheet surface) so that the sheet surface tends to assume a dry state, so it is effective to sufficiently compensate for the amount of the diluent.

In addition, as described above, the amount of the diluent that is bled out differs from the amount of the remaining diluent at the vicinity of the stretching part due to the composition of the resin or the temperature. Thus, it is preferable to provide a diluent scraping unit such as a scraper or the like in the vicinity of the cooling drums 31 and 32 or between the heating parts 41 to 44 of the longitudinal stretching step 4 so as to reduce the amount of the bled out diluent that adheres to the surface of the sheet 12 and apply the diluent by the application unit 91, or to employ the combination these techniques. By selecting these methods appropriately, it is possible to prevent or light decreases in appearance grade due to contamination, regardless of the amount of bleeding.

The method of applying the diluent in the stretching step will be described in detail hereinafter.

The diluent applied in the stretching step does not need to be exactly the same as the diluent that is kneaded with the polymer in the extrusion step, but it is preferable to use the same diluent in order to prevent a reduction in appearance grade such as new color unevenness caused by differences in composition, changes in the flow characteristics in the extruder at the time of reuse when the diluent as described below is recovered, and contamination at the time of disposal.

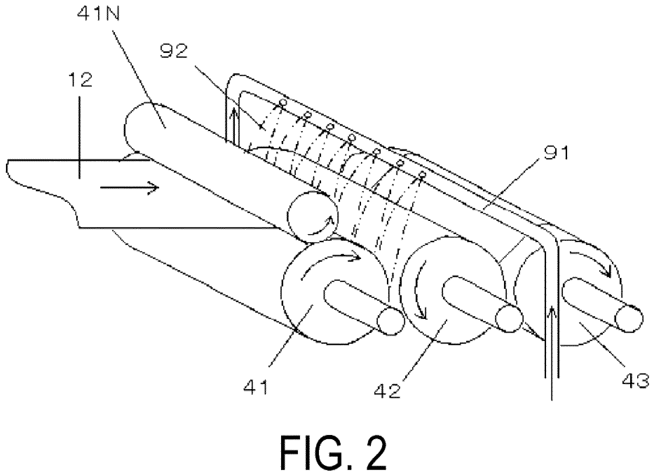

FIG. 2 is an example of an application method for the diluent 92 in FIG. 1. The simplest method is to provide holes or slits in a part of the piping so as to drop liquid droplets of the diluent 92 onto the sheet 12 conveyed over the heating rollers, onto at least one of the heating rollers 41 to 44, or onto the sheet and any of the rollers in part of the longitudinal stretching step 4, as illustrated in FIG. 2. In this case, it is preferable to take steps to ensure that the flow rate distribution does not fluctuate due to a pressure drop in the piping by making the hole diameter or slit width uniform or by supplying the diluent from both sides in the roller axial direction, as illustrated in FIG. 2, to ensure that there is no unevenness in the flow rate of the diluent. It is also preferable to adjust the coating, which varies over time, by adjusting the flow rate of some parts in the width direction. In addition to the liquid dropping unit illustrated in FIG. 2, a slit die, a gravure roller, a meta-bar, a dipping method, a kiss die, or the like may be used as a conventionally known application unit.

The sheet 12 is sufficiently heated prior to reaching the stretching part 45 and is stretched in the longitudinal direction by the stretching part 45 so as to become thin, but it is critical for the amount of the diluent adhered to the surface of the sheet 12 to be sufficiently large at the stretching part 45, where the temperature is high and becomes thin due to stretching. Therefore, although the installation location of the application unit 91 in FIGS. 1 and 2 is on the roller 42, which is the second heating roller in the longitudinal stretching step 4. The installation location is not limited to this example, and the diluent may be applied on either the heating rollers or in the stretching part 45. In particular, when the diluent is uniformly applied to both sides of the sheet 12, the application unit may be near the stretching part. When the diluent is applied to one side or applied onto the rollers as in FIG. 2, or the diluent is dropped from a plurality of holes or the like as illustrated in FIG. 2 and when the diluent is roughly applied with a small amount of holes, the application unit may be placed upstream from the stretching part 45 by an amount equal to the number of heating rollers so as to secure time for the diluent to reach the entire surface of the sheet 12 by the time that the sheet 12 reaches the stretching part 45. Specifically, the diluent may be applied to the sheet 12 in the region where any of the heating rollers 41 to 44 for performing the preliminary stretching described above is provided. In addition, a nip roller is provided on the rollers, and when it is difficult to drop the diluent directly onto the rollers, the diluent can be dropped from the nip roller so as to interpose the nip roller and substantially lubricate the diluent on the rollers.

Furthermore, regarding the surface characteristics of the heating rollers 41 to 44, a mirror surface which does not actively discharge the diluent is preferable when either a mirror surface or a rough surface is selected after the diluent 92 is applied. A reduction in appearance grade can be achieved when a sufficient amount of the diluent 92 is present on the mirror surface from the second half of the heating parts 41 to 44 to the stretching part 45.

The diluent 92 is transferred to the application unit 91 using a pump or the like. In this case, the application flow rate may be calculated from the revolution speed or the like of the pump so as to enable open control, and it is preferable to measure the application flow rate with a flowmeter, a gravimeter, or the like and to feed the diluent back to the transfer unit such as a pump.

The applied amount of the diluent 92 may be appropriately adjusted while monitoring the appearance of the sheet 12 in the stretching part 45 or the traveling characteristics (bending or deviation), thickness unevenness, or the like of the film 13 after stretching, but the application flow rate of the diluent is preferably not lower than $5 \times 10^{-3}$ L/m$^2$ and not higher than $30 \times 10^{-3}$ L/m$^2$. If the application flow rate is lower than $5 \times 10^{-3}$ L/m$^2$ and the amount of diluent bleed out of from the sheet 12 is small, or if the diluent in the stretching part or downstream from the heating parts of the stretching part 4 has already been bled out and dried, there may be more decreases in appearance grade as described above. If the application flow rate is higher than $30 \times 10^{-3}$ L/m$^2$, the amount of lubrication of the diluent between the sheet 12 and the roller surface of the stretching part 4 becomes large, which may cause the sheet to bend easily as well as lead to increases in production costs such as an increase in the volume of the pan 94 due to an increase in the amount of diluent to be recovered or an increase in the volume of the pump or the like along the recovery path of the diluent. In addition, when the diluent is lubricated by interposing a nip roller, the excessive lubrication of the nip roller may cause a rotary malfunction, so the upper limit of the applied amount is preferably set to $9 \times 10^{-3}$ L/m$^2$. Accordingly, even if the diluent is not lubricated by interposing a nip roller, there is still a risk that a rotary malfunction may occur in the nip roller if the diluent is lubricated (applied) in the vicinity of the nip roller. Therefore, when the diluent is lubricated in the vicinity of the nip roller in this way, the upper limit of the applied amount is preferably set to $9 \times 10^{-3}$ L/m$^2$. When a driving mechanism is provided in the nip roller, there is no risk that a rotary malfunction may occur, so the upper limit of the amount of lubrication of the diluent is preferably set to $30 \times 10^{-3}$ L/m$^2$, as in the case in which a nip roller is not interposed.

In addition, a conveying roll may be provided between a chill roll and a stretching region. In this case, the solvent on the conveying roller surface may be set in the same manner as in the case of the heating rollers described above.

**Working Examples**

The present invention is described below using examples. However, the present invention is not limited by these examples in any way.

Working Example 1

A mixture was obtained by dry-blending 0.375 parts by mass of tetrakis[methylene-3-(3,5-ditertiary-butyl-4-hydroxyphenyl)-propionate]methane into 100 parts by mass of a polyethylene (PE) composition comprising 40 mass% of an ultra-high molecular weight polyethylene having a mass average molecular weight (Mw) of $2.5 \times 10^6$ and 60 mass% of a high-density polyethylene (HDPE) having a Mw of $2.8 \times 10^5$.

The obtained mixture was loaded into a twin-screw extruder 21 at a flow rate of 54 kg/hr using the film forming method illustrated in FIG. 1, and liquid paraffin was mixed as a diluent into the mixture at 210°C inside the twin-screw extruder 21 at a flow rate of 162 kg/hr.

The obtained polyethylene solution was fed to a mouthpiece 23 at 210°C while being weighed by a gear pump, and the solution was discharged onto a cooling drum 31 adjusted to 35°C with passing water to form a gel sheet 12. The cooling drum 31 was driven to rotate at a speed of 3 m/min.

The obtained gel sheet 12 was heated with heating rollers 41 to 44 and a first metal water-passing roller of a longitudinal stretching part 45 so that the temperature of the sheet surface was 105°C. At this time, the revolution speed of motor directly coupled to the rollers was controlled so as to increase in the downstream direction with a 1% speed difference between the respective rollers. Nipping was performed at a nip pressure of 0.1 MPa using a nip roller 41 N having a surface covered with rubber, the nip roller 41 N being provided on the heating roller 41. The longitudinal stretching part 45 includes four rollers, as illustrated in FIG. 1. A nip roller having a surface covered with rubber was provided on each roller, and longitudinal stretching was performed using the speed differences between the rollers. The stretched film 13 was cooled with the four rollers of a cooling part 46 including the final roller of the longitudinal stretching part 45, and the passing-water roller temperature was adjusted so that the sheet temperature was 50°C. Here, the speed differences between the cooling rollers were adjusted so as to be delayed by 1% downstream each time the sheet passed through the four rollers.

The stretching roller speed was adjusted so that the magnification was 9 times after passing through the longitudinal stretching step 4, including a 1% speed difference of each cycle, and the speed of the film 13 after passing through the longitudinal stretching step 4 was thus set to 27 m/min.

Both ends of the obtained stretched film 13 were gripped with clips, and the film was stretched transversally at a magnification of 6 times at a temperature of 115°C in an oven 5. The biaxially stretched film 14 that was cooled to 30°C was washed in a washing tank of methylene chloride adjusted to a temperature of 25°C so as to remove the liquid paraffin. The washed membrane was dried in a drying furnace adjusted to 60°C, and the sheet was re-stretched at an area magnification of 1.2 times in the longitudinal direction and the transverse direction in a re-stretching step 7. The sheet was then heat treated for 20 seconds at a rate of 29.7 m/min at 125°C so as to obtain a microporous plastic film 11 having a thickness of 16 $\mu$m and a width of 2,000 mm.

Here, an application unit 91 such as that illustrated in FIG. 2 was provided on the heating roller 42 having a face length of 500 mm in the longitudinal stretching step 4, and a diluent 92 was applied at a total flow rate $Q = 33 \times 10^{-3}$ ($L/m^2$) from holes with a diameter of 3 mm positioned at 7 locations in the width direction. The width of the gel sheet 12 in this step was approximately 300 mm, and the speed was 3 m/min, which was roughly the same as that of the cooling drums 13 and 14.

Working Example 2

A microporous plastic film was produced with the same apparatus and under the same conditions as in Working Example 1 with the exception that the longitudinal stretching temperature was set to 115°C, as shown in Table 1.

Working Example 3

A microporous plastic film was produced with the same apparatus and under the same conditions as in Working Example 1 with the exception that the longitudinal stretching temperature was set to 115°C, and that the application flow rate of the diluent was set to $Q = 3 \times 10^{-3}$ $L/m^2$, as shown in Table 1.

Working Example 4

A microporous plastic film was produced with the same apparatus and under the same conditions as in Working Example 1 with the exception that the longitudinal stretching temperature was set to 115°C, and that the application flow rate of the diluent was set to $Q = 6 \times 10^{-3}$ $L/m^2$, as shown in Table 1.

Working Example 5

A microporous plastic film was produced with the same apparatus and under the same conditions as in Working Example 1 with the exception that the longitudinal stretching temperature was set to 115°C, and that the application flow rate of the diluent was set to Q = 25 x $10^{-3}$ L/m$^2$, as shown in Table 1.

Working Example 6

A microporous plastic film was produced with the same apparatus and under the same conditions as in Working Example 1 with the exception that the longitudinal stretching temperature was set to 105°C, and that the application flow rate of the diluent was set to Q = 25 x $10^{-3}$ L/m$^2$, as shown in Table 1.

Working Example 7

A microporous plastic film was produced with the same apparatus and under the same conditions as in Working Example 3 with the exception that the longitudinal stretching temperature was set to 125°C, as shown in Table 1.

Working Example 8

A microporous plastic film was produced with the same apparatus and under the same conditions as in Working Example 1 with the exception that the longitudinal stretching temperature was set to 125°C, that a diluent was not applied, and that a nip roller was not used, as shown in Table 1.

Working Example 9

A microporous plastic film was produced with the same apparatus and under the same conditions as in Working Example 2 with the exception that the longitudinal stretching temperature was set to 125°C, as shown in Table 1.

Comparative Example 1

The longitudinal stretching temperature was set to 115°C, and a diluent was not applied, as shown in Table 1. A microporous plastic film was otherwise produced with the same apparatus and under the same conditions as in Working Example 1.

Comparative Example 2

The longitudinal stretching temperature was set to 105°C, and a diluent was not applied, as shown in Table 1. A microporous plastic film was otherwise produced with the same apparatus and under the same conditions as in Working Example 1.

Comparative Example 3

The longitudinal stretching temperature was set to 125°C, and a diluent was not applied, as shown in Table 1. A microporous plastic film was otherwise produced with the same apparatus and under the same conditions as in Working Example 1.
The produced microporous plastic films were evaluated under the following criteria, and the results are shown in Table 1.

Appearance grade of film 14

The appearance grade of the film 14 was evaluated. A 150-lumen LED light source was used as a test light source for confirming the appearance. The surface forming the upper part when the films 11 and 14 were traveling was used as the evaluation surface for the appearance grade. The film was irradiated with the LED light source at a distance of 1 m from the film in a direction orthogonal to the traveling direction of the film and at an angle of 0 degrees from the orthogonal direction, and an assessment was made in accordance with the following criteria.

P (Poor): The appearance of the traveling film 14 was observed visually at the end of the transverse stretching step 5, and light and dark shades were confirmed.

G (Good): Light and dark shades were not confirmed on the traveling film 14, but light and dark shades were confirmed in a static state when the film 14 discharged from the transverse stretching step 5 was cut.
E (Excellent): Light and dark shades were not confirmed even on the film 14 in a static state.

Appearance grade of film 11

The appearance grade of the film 11 was evaluated in accordance with the following criteria.

P (Poor): The appearance of the traveling film 11 was observed visually after the diluent was washed, and light and dark shades were confirmed.
G (Good): Light and dark shades were not confirmed on the traveling film 11, but light and dark shades were confirmed in a static state when the film 14 was cut after the diluent was washed.
E (Excellent): Light and dark shades were not confirmed even on the film 11 in a static state.

Amount of bending in longitudinal stretching step

The amount of bending in the longitudinal stretching step 4 was evaluated in accordance with the following criteria.

P (Poor): The amount of bending was not less than 10 mm.
G (Good): The amount of bending was not less than 5 mm and less than 10 mm.
E (Excellent): The amount of bending was less than 5 mm.

Amount of diluent at stretching roller group inlet ($L/m^2$)

A polyester scraper 100 was pressed onto the sheet 12 traveling over the first roller 45A of the stretching part 45 at a pressure of 0.05 MPa at an angle of 45° from the center of the roller, and the diluent was scraped off for 5 minutes. The volume V of the diluent that was scraped off was measured, and the amount of the diluent at the stretching roller group inlet was measured with the following formula from the speed v (m/min) of the roller 45A and the sheet width W (mm) of the portion in contact with the scraper.

$$\text{Amount of diluent at stretching roller group inlet } (L/m^2)$$
$$= V \text{ (L) } /\{5 \text{ (min) x v (m/min) x W/1000}\}$$

[Table 1]

| | Casting temperature (°C) | Longitudinal stretching temperature (°C) | Application flow rate of diluent (×10³ L/m²) | Nip roller 41N | Amount of diluent on sheet at roller 44A (×10³ L/m²) | Amount of bending at the time of longitudinal stretching | Sheet 14 appearance | Film 11 appearance |
|---|---|---|---|---|---|---|---|---|
| Working Example 1 | 35 | 105 | 33 | Used | 33 | P | E | E |
| Working Example 2 | 35 | 115 | 33 | Used | 35 | G | E | E |
| Working Example 3 | 35 | 115 | 3 | Used | 5 | E | G | G |
| Working Example 4 | 35 | 115 | 6 | Used | 8 | E | E | E |
| Working Example 5 | 35 | 115 | 25 | Used | 27 | E | E | E |
| Working Example 6 | 35 | 105 | 25 | Used | 24 | G | E | E |
| Working Example 7 | 35 | 125 | 3 | Used | 7 | E | E | E |
| Working Example 8 | 35 | 125 | 0 | Not used | 20 | P | E | E |
| Working Example 9 | 35 | 125 | 33 | Used | 38 | P | E | E |
| Comparative Example 1 | 35 | 115 | 0 | Used | 2 | E | P | P |
| Comparative Example 2 | 35 | 105 | 0 | Used | 1 | E | P | P |
| Comparative Example 3 | 35 | 125 | 0 | Used | 2 | E | P | P |

In a comparison of Working Example 1 with Comparative Example 2 or Working Example 2 with Comparative Example 1, it can be seen that the appearance grades of the film 14 and the film 11 can be enhanced by applying a diluent, even at the same stretching temperature.

In a comparison of Working Example 1 with Working Example 6 or Working Example 2 with Working Example 5, it can be seen that bending in the longitudinal stretching step can be improved by setting the application flow rate of the diluent to the preferable upper limit or lower, even at the same stretching temperature.

In a comparison of Working Example 3 with Working Example 4, it can be seen that the appearance grades of the film 14 and the film 11 can be enhanced by setting the application flow rate of the diluent to the preferable lower limit or higher, even at the same stretching temperature.

In a comparison of Working Example 3 with Working Example 7, it can be seen that even at the same stretching temperature, the amount of bleeding of the diluent in the preheating step is larger when the stretching temperature is higher, so the amount of the diluent on the sheet is larger, and appearance grades of the film 14 and the film 11 can be enhanced.

In a comparison of Working Example 8 with Comparative Example 3, it can be seen that even at the same stretching temperature, the amount of the diluent on the sheet decreases when a nip roller is used, and the appearance grades of the film 14 and the film 11 are diminished. On the other hand, it can be seen that when a nip roller is used, bending in the longitudinal stretching step can be improved.

As described above, with the present invention, when required stretching is performed to achieve the desired characteristics of a microporous film, it is possible to obtain a microporous plastic film having an excellent appearance grade while maintaining traveling stability at the required stretching temperature.

**Industrial Applicability**

The present invention can not only be used for microporous plastic films used as separators or the like for electrochemical reaction devices such as rechargeable batteries, fuel cells, capacitors, and can also be applied to functional webs such as filter membranes, printing membranes, or various clothing materials, but the scope of application thereof is not limited to these examples.

**Reference Signs List**

| | |
|---|---|
| 11 | Microporous plastic film |
| 12 | Gel sheet (film) |
| 13 | Uniaxially stretched sheet (film) |
| 14 | Biaxially stretched sheet (film) |
| 15 | Microporous plastic film roll |
| 21 | Extruder |
| 22 | Gear pump |
| 23 | Mouthpiece |
| 31 | Cooling drum |
| 32 | Second cooling drum |
| 4 | Longitudinal stretching step |
| 41 | Heating roller |
| 41N | Nip roller |
| 42 | Second heating roller |
| 43 | Third heating roller |
| 44 | Fourth heating roller |
| 45 | Stretching roller group |
| 45A | First stretching roller |
| 46 | Cooling roller group |
| 5 | Transverse stretching step |
| 6 | Washing/drying step |
| 61 | Washing solvent |
| 7 | Re-stretching/heat treatment step |
| 8 | Winding step |
| 91 | Diluent application unit |
| 92 | Diluent |

93    Diluent recovery unit for cooling step
94    Diluent recovery unit in longitudinal stretching step
100   Scraper

**Claims**

1. A production method of a microporous plastic film, the method comprising:

kneading a diluent and a polymer with an extruder;
discharging the polymer kneaded with the diluent into a sheet from a mouthpiece; and
stretching the sheet discharged from the mouthpiece in a conveying direction of the sheet with a plurality of rollers;
an amount of the diluent on the sheet being not less than $4 \times 10^{-3}$ L/m$^2$ and not greater than $40 \times 10^{-3}$ L/m$^2$ in the step of stretching the sheet in the conveying direction of the sheet.

2. A production method of a microporous plastic film, the method comprising:

kneading a diluent and a polymer with an extruder;
discharging the polymer kneaded with the diluent into a sheet from a mouthpiece; and
stretching the sheet discharged from the mouthpiece in a conveying direction of the sheet with a plurality of rollers;
the diluent being applied to at least one of the plurality of rollers and/or the sheet in the step of stretching the sheet in the conveying direction of the sheet.

3. The production method of a microporous plastic film according to claim 2, wherein an application flow rate of the diluent in the step of stretching the sheet in the conveying direction of the sheet is not lower than $5 \times 10^{-3}$ L/m$^2$ and not higher than $30 \times 10^{-3}$ L/m$^2$.

4. The production method of a microporous plastic film according to any one of claims 1 to 3, wherein the sheet is pressed between the heating roller in the stretching step and a nip roller having a surface covered with rubber in the step of stretching the sheet in the conveying direction of the sheet.

FIG. 1

FIG. 2

FIG. 3

## INTERNATIONAL SEARCH REPORT

International application No.

PCT/JP2015/057058

A.  CLASSIFICATION OF SUBJECT MATTER
*C08J9/00*(2006.01)i, *B01D71/26*(2006.01)i, *B29C47/34*(2006.01)i, *B29C47/88*
(2006.01)i, *C08J9/26*(2006.01)i

According to International Patent Classification (IPC) or to both national classification and IPC

B.  FIELDS SEARCHED

Minimum documentation searched (classification system followed by classification symbols)
C08J9/00, B01D71/26, B29C47/34, B29C47/88, C08J9/26

Documentation searched other than minimum documentation to the extent that such documents are included in the fields searched
Jitsuyo Shinan Koho        1922-1996   Jitsuyo Shinan Toroku Koho   1996-2015
Kokai Jitsuyo Shinan Koho  1971-2015   Toroku Jitsuyo Shinan Koho   1994-2015

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | JP 2011-526547 A  (Toray Tonen Specialty Separator Godo Kaisha), 13 October 2011 (13.10.2011), claims; paragraphs [0021], [0022], [0073], [0076]; paragraph [0103], fig. 1 & WO 2010/001722 A2 | 1<br>2-4 |
| X<br>A | JP 2012-500130 A  (Toray Tonen Specialty Separator Godo Kaisha), 05 January 2012 (05.01.2012), claims; paragraphs [0009], [0020] to [0025], [0098], [0105], [0106]; fig. 1 & WO 2010/018749 A1 | 1<br>2-4 |

☒  Further documents are listed in the continuation of Box C.      ☐  See patent family annex.

* Special categories of cited documents:
"A"  document defining the general state of the art which is not considered    to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

Date of the actual completion of the international search
08 June 2015 (08.06.15)

Date of mailing of the international search report
16 June 2015 (16.06.15)

Name and mailing address of the ISA/
Japan Patent Office
3-4-3,Kasumigaseki,Chiyoda-ku,
Tokyo 100-8915,Japan

Authorized officer

Telephone No.

Form PCT/ISA/210 (second sheet) (July 2009)

**INTERNATIONAL SEARCH REPORT**

International application No.

PCT/JP2015/057058

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2009-190987 A  (Fujifilm Corp.), 27 August 2009 (27.08.2009), claims; fig. 1 (Family: none) | 1-4 |
| A | JP 2013-530261 A  (SK Innovation Co., Ltd.), 25 July 2013 (25.07.2013), claims; paragraphs [0006], [0039] to [0050] & US 2013/0116355 A1   & US 2014/0349193 A1 & WO 2011/132921 A1 | 1-4 |
| A | JP 4033246 B2  (Tonen Chemical Corp.), 02 November 2007 (02.11.2007), claims; table 1; fig. 1 (Family: none) | 1-4 |
| A | JP 2013-32545 A  (Toray Battery Separator Film Co., Ltd.), 14 February 2013 (14.02.2013), claims; paragraph [0031]; paragraph [0122], table 1 & US 2010/0151310 A1   & US 2013/0256933 A1 & WO 2007/015547 A1   & EP 1911795 A1 | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012500130 A
- JP 5021461 B
- WO 2008016174 A